# EUROPÄISCHE PATENTSCHRIFT

(11) **EP 3 104 558 B1**
(45) Veröffentlichungstag und Bekanntmachung des Hinweises auf die Patenterteilung: **12.12.2018**
(21) Anmeldenummer: 15171749.3
(22) Anmeldetag: 11.06.2015
(51) Int. Cl.: H04L 12/42, H04L 12/40

(54) **NETZWERKINTERFACE, NETZWERK UND VERFAHREN ZUR DATENÜBERTRAGUNG INNERHALB DES NETZWERKES**
NETWORK INTERFACE, NETWORK AND METHOD FOR TRANSFERRING DATA WITHIN THE NETWORK
INTERFACE RÉSEAU, RÉSEAU ET PROCÉDÉ DE TRANSMISSION DE DONNÉES DANS LE RÉSEAU

(43) Veröffentlichungstag der Anmeldung: 14.12.2016
(73) Patentinhaber: Airbus Defence and Space GmbH, 85521 Ottobrunn (DE)
(72) Erfinder: Pistner, Thomas, 80993 München (DE); Prücklmeier, Andreas, 80339 München (DE); Schneele, Stefan, 81541 München (DE)
(74) Vertreter: LKGLOBAL Lorenz & Kopf PartG mbB Patentanwälte

(56) Entgegenhaltungen:
- WO-A1-01/15363
- WO-A1-2011/017233
- US-A1- 2014 032 660

## Beschreibung

Die vorliegende Anmeldung betrifft insbesondere ein Netzwerkinterface eines Netzwerkteilnehmers mit zumindest einer physikalischen Schnittstelle zum Verbinden des Netzwerkinterfaces mit einem Netzwerkinterface eines anderen Netzwerkteilnehmers, zumindest einer Datenweiche und zumindest einem Datenschalter. Weiterhin betrifft die Anmeldung ein Netzwerk, das Netzwerkteilnehmer mit den genannten Netzwerkinterfaces aufweist, sowie Verfahren zur Datenübertragung und Fehlerdetektion innerhalb des Netzwerkes. Technische Vorteile ergeben sich daraus, dass das Netzwerkinterface insbesondere bei Abwärtsverbindungen innerhalb des Netzwerkes ohne bzw. mit sehr geringer Latenzzeit Daten übertragen kann. Das Netzwerk selbst kann zudem die technischen Vorteile nutzen, dass die Netzwerkteilnehmer im Hinblick auf die Hardware möglichst identisch aufgebaut sein können und Daten zuverlässig und schnell, auch mittels der hier beschriebenen Verfahren, übertragen werden können. Defekte können zuverlässig und zeitnah erkannt werden; die Kommunikation innerhalb des Netzwerkes kann trotz eines Defektes aufrechterhalten werden.

In-Flight-Entertainment-Systeme (IFE-Systeme) in zivilen Flugzeugen, aber auch andere Systeme, bspw. in heutigen und zukünftigen zivilen und militärischen Plattformen, verlangen nach Kommunikationsarchitekturen mit einer immer höheren Datenbandbreite und einer immer höheren Anzahl von Netzwerkknoten bei geringer Ausfallrate und geringer Latenzzeit. Diese Anforderungen führen häufig zu einer komplexen Verkabelung mit einer Vielzahl an benötigten Steckverbindern und Datenleitungen, z. B. bei einer Sternarchitektur. Nachteile entstehen hierbei durch das damit anfallende hohe Gewicht, den hohen Installationsaufwand und die geringe Anpassungsfähigkeit.

Insbesondere klassische Stern-Architekturen bringen einen hohen Verkabelungsaufwand mit sich, der durch Daisy-Chain-Architekturen, wie z. B. aus WO 2011/017233 A1 bekannt, oder Ringarchitekturen, wie z. B. aus der US 2014/032660 A1 bekannt, vermieden werden soll. Diese Architekturen haben jedoch hohe Latenzzeiten als Nachteil, wie bspw. der HSR (highavailability Seamless Redundancy) Standard.

Aus WO 01/15363 ist weiter ein System zum Transport von Datenpaketen in einem Ringnetzwerk bekannt. Das System umfasst Netzwerkinterfaces von Netzwerkteilnehmern. Ein Netzwerkinterface umfasst dabei Schnittstellen-Schaltkreise zum Verbinden mit anderen Schnittstellen. Die Schnittstelle ist mit einem Sende-/Empfangsschaltkreis verbunden, der Daten an die Schnittstelle sendet oder Daten von der Schnittstelle empfängt.
Es besteht Bedarf für ein Netzwerkinterface, das eine Reduktion von Latenzzeiten bei der Übertragung von Daten in einem Netzwerk ermöglicht. Weiterhin besteht Bedarf für ein Netzwerk mit Netzwerkteilnehmern, die das Netzwerkinterface umfassen, und das bei geringem Verkabelungsaufwand eine hohe Zuverlässigkeit und geringe Latenzzeiten aufweist. Weiterhin besteht Bedarf für Verfahren zur zuverlässigen Datenübertragung innerhalb dieses Netzwerkes mit geringen Latenzzeiten - auch bei Vorliegen eines Defektes innerhalb des Netzwerkes.

Die Aufgabe wird von den hier beschriebenen Ausführungen gemäß den unabhängigen Patentansprüchen gelöst. Bevorzugte Weiterentwicklungen werden von den abhängigen Patentansprüchen beschrieben.

Gemäß einem Aspekt wird hier ein Netzwerkinterface eines Netzwerkteilnehmers beschrieben, das zumindest eine physikalische Schnittstelle mit umkehrbarer Datenflussrichtung zum Verbinden des Netzwerkinterfaces mit einem Netzwerkinterface eines anderen Netzwerkteilnehmers aufweist.

Ferner umfasst das Netzwerkinterface zumindest eine Datenweiche, die mit der zumindest einen physikalischen Schnittstelle, bspw. mittels zumindest einer Datenleitung, verbunden ist. Der Begriff verbunden soll hier, falls nicht anders gezeigt oder genannt, nicht darauf einschränken, dass die verbundenen Komponenten direkt miteinander verbunden sind; so können durchaus weitere Komponenten zwischen den beiden verbundenen Komponenten angeordnet sein. "Verbunden" kann aber auch die direkte Verbindung umfassen. Die Datenweiche ist dazu eingerichtet, Daten von der physikalischen Schnittstelle zu empfangen und/oder Daten an die physikalische Schnittstelle zu senden. Zusätzliche Funktionen oder Verbindungen mit anderen Komponenten oder Bauteilen können vorgesehen bzw. eingerichtet sein.

Ferner ist zumindest ein Datenschalter vorgesehen, der, mittels zumindest einer Datenleitung, mit der Datenweiche verbunden ist. Der Datenschalter ist dazu eingerichtet, Daten von der Datenweiche zu empfangen und/oder an die Datenweiche zu senden. Der Datenschalter kann ferner auch mit anderen/zusätzlichen Bauteilen bzw. Komponenten verbunden sein. Bevorzugt kann der Datenschalter eine Datenverbindung zu dem Netzwerkteilnehmer bzw. dessen internen weiteren Komponenten aufweisen, bspw. zu internen Datenspeichern, Rechnern, Anzeigeeinrichtungen oder dgl., die mit dem Netzwerkinterface verbunden sind. Ist der Netzwerkteilnehmer beispielsweise eine IFE-Einheit eines Flugzeuges, die das hier beschriebene Netzwerkinterface aufweist, so kann der Datenschalter mit dem internen Rechner und/oder Speicher der IFE-Einheit verbunden sein und die Weitergabe der Daten von/an diese Komponenten der IFE-Einheit regulieren. Ferner ist die Datenweiche dazu eingerichtet, von der physikalischen Schnittstelle empfangene Daten an eine physikalische Schnittstelle zum Weiterleiten der Daten an einen anderen Netzwerkteilnehmer und an den Datenschalter weiterzuleiten. Das Weiterleiten der Daten an eine physikalische Schnittstelle umfasst weiter, dass die physikalische Schnittstelle des

Netzwerkteilnehmers, an die die Daten weitergeleitet werden, eine andere ist als die physikalische Schnittstelle, von der die Daten empfangen wurden. Insbesondere und bevorzugt werden die Daten von der Datenweiche an einen anderen Netzwerkteilnehmer und den Datenschalter gleichzeitig weitergeleitet. Der Datenschalter kann bspw. im Falle einer Abwärtsverbindung, in der ein Server des Netzwerkes Daten an Klienten versendet, darüber "entscheiden", ob die empfangenen Daten an den Netzwerkteilnehmer bzw. dessen internen Komponenten, wie z.B. ein Speicher oder ein Rechner, weitergeleitet werden. Bestellt bspw. ein Passagier eines Flugzeuges ein Video an seinem Sitzplatz bzw. an seiner IFE-Einheit, so würde nur der Datenschalter dieses Netzwerkteilnehmers die Videodaten weiterleiten. Die Datenschalter anderer Netzwerkteilnehmer, die das Video nicht bestellt haben, blockieren dann die Weitergabe an die zugehörige IFE-Einheit.

Die Datenweiche leitet gemäß dem hier beschriebenen Aspekt die empfangenen Daten im Wesentlichen gleichzeitig bzw. so schnell wie möglich, ohne Zwischenspeicherung, über die eigene physikalische Schnittstelle an einen weiteren Netzwerkteilnehmer bzw. dessen physikalische Schnittstelle weiter. Ein weiterer bzw. anderer Netzwerkteilnehmer kann bevorzugt der Netzwerkteilnehmer sein, der im Netzwerk in Datenflussrichtung benachbart zu dem Netzwerkteilnehmer angeordnet ist.

Der technische Vorteil des hier beschriebenen Netzwerkinterfaces ist es somit, dass keine Latenzzeiten auftreten, wie bei vorbekannten Netzwerkinterfaces, die keine Datenweiche zum prompten Weiterleiten von Daten an den nächsten Netzwerkteilnehmer aufweisen. Bekannte Netzwerkinterfaces bzw. Netzwerkteilnehmer weisen einen Datenschalter auf, der zunächst eine Zwischenspeicherung der empfangenen Daten vornimmt und diese zunächst an den Netzwerkteilnehmer bzw. dessen internen Komponenten sendet, bevor die Daten ggf. an einen weiteren Netzwerkteilnehmer bzw. dessen Interface bzw. dessen physikalische Schnittstelle weiterversendet werden. Mit anderen Worten weist die Datenweiche die technisch vorteilhafte Eigenschaft auf, dass empfangene Daten möglichst ohne Zeitverzug bzw. mit nur sehr geringer Latenz an den nächsten Netzwerkteilnehmer und (gleichzeitig) an den Netzwerkteilnehmer der Datenweiche selbst weitergeleitet werden. Latenzzeiten werden somit wirksam reduziert bzw. unterdrückt.

Gemäß einem weiteren Aspekt kann das Netzwerkinterface zumindest eine (unidirektionale) physikalische Schnittstelle für eine Abwärtsverbindung (nachfolgend auch als "downlink" bezeichnet) und zumindest eine (unidirektionale) physikalische Schnittstelle für eine Aufwärtsverbindung (nachfolgend auch als "uplink" bezeichnet) aufweisen. Abwärtsverbindung soll insbesondere im Zusammenhang mit einem Netzwerk bedeuten, dass ein Server-Netzwerkteilnehmer (oder kurz: Server) Daten an die im Netzwerk angeschlossenen Klienten-Netzwerkteilnehmer (oder kurz: Clients) versendet, die diese empfangen können und ggf. weiterleiten können. Aufwärtsverbindung soll insbesondere im Zusammenhang mit einem Netzwerk bedeuten, dass ein Klienten-Netzwerkteilnehmer Daten an den im Netzwerk angeschlossenen Server, ggf. über die anderen Klienten-Netzwerkteilnehmer, in dem Netzwerk versendet, die der Server empfangen kann und ggf. weiterleiten kann.

Ferner ist die physikalische Schnittstelle bidirektional ausgeführt. Bei einer bidirektionalen Ausführung der physikalischen Schnittstelle kann bevorzugt jedes Netzwerkinterface nur eine einzelne physikalische Schnittstelle aufweisen, um die Menge an Bauteilen und Kosten zu reduzieren. Für den Fall, dass nur eine einzelne (bidirektionale) Schnittstelle
vorgesehen ist, so können über diese Daten empfangen und versendet werden. Unidirektional oder bidirektional soll nicht dahingehend einschränkend verstanden werden, dass die Datenflussrichtungen bzw. die Empfangs- oder Sendeeigenschaften nicht geändert werden können. So ist es ein bevorzugter hier beschriebener Aspekt, dass im Falle eines Defektes innerhalb eines Netzwerkes die Datenflussrichtung zumindest zeitweise umgekehrt wird, was weiter unten ausführlich beschrieben ist.

Ferner können auch die Leitungen, die mit der physikalischen Schnittstelle verbunden sind, bidirektional oder unidirektional ausgeführt sein. Die bidirektionale Leitung kann Daten zum Empfang und Versand transportieren, während bei unidirektionalen Leitungen jeweils zwei Leitungen mit einer physikalischen Schnittstelle verbunden sein können, um Empfang und Versand von Daten zu ermöglichen. Kombinationen von unidirektionalen und bidirektionalen physikalischen Schnittstellen und daran angeschlossenen Leitungen sind je nach Einsatzerfordernissen bildbar.

Ferner kann das Netzwerkinterface Teil eines Klienten-Netzwerkteilnehmers und/oder Teil eines Server-Netzwerkteilnehmers sein. Mit anderen Worten kann das hier beschriebene Netzwerkinterface insbesondere und bevorzugt im Hinblick auf die Hardware für Server und Client gleich aufgebaut sein, was im Hinblick auf die Verwendung möglichst vieler gleicher Bauteile zu Kostenvorteilen führt und die Komplexität eines Netzwerkes, das diese Netzwerkteilnehmer aufweist, reduziert.

Ferner ist die Datenweiche eines Klienten-Netzwerkteilnehmers dazu eingerichtet, von einer physikalischen Schnittstelle eingehende Daten in einer Abwärtsverbindung zu verdoppeln und ohne Zwischenspeicherung an einen anderen Netzwerkteilnehmer und den Datenschalter weiterzuleiten. Dadurch werden hohe Latenzzeiten vermieden und es wird ermöglicht, dass sowohl der Datenschalter als auch der nächste Netzwerkteilnehmer möglichst zeitgleich die Daten erhalten.

Bei einer Aufwärtsverbindung, insbesondere wenn diese weniger oft verwendet wird, weniger zeitkritisch und/oder nur geringe Datenvolumen umfasst (wie dies üblicherweise z.B. in IFE-Systemen von Flugzeugen der Fall ist), können die Daten (anders als in der Abwärtsverbindung) jeweils über den Datenschalter geführt sein, so dass hier gewisse Latenzzeiten vorkommen und in Kauf genommen werden können.

Die Datenweiche, insbesondere die eines Klienten-Netzwerkteilnehmers, kann dazu eingerichtet sein, für von einer physikalischen Schnittstelle eingehende Daten, bevorzugt bei einer Abwärtsverbindung, eine Taktrückgewinnung durchzuführen, wobei für die Taktrückgewinnung auch der Begriff "data and clock recovery" gebräuchlich ist.

Ferner kann die Datenweiche mit zumindest einer physikalischen Schnittstelle und dem Datenschalter zur Übertragung zumindest von (Arbeits-)Daten zwischen diesen Komponenten des Netzwerkinterfaces (insbesondere datenmäßig bzw. mittels einer Datenleitung) verbunden sein. Eine Steuereinrichtung des Netzwerkinterfaces kann ferner zumindest mit der Datenweiche, der physikalische Schnittstelle und dem Datenschalter derart verbunden sein, dass Steuersignale zwischen der Steuereinrichtung und diesen Komponenten übertragbar sein können. Die (Arbeits-)Daten können insbesondere im Netzwerk übertragene Daten umfassen, wie z.B. Video oder Audio-Dateien im Beispiel des Flugzeug-IFE-Systems. Steuersignale können bevorzugt über die gleichen Leitungen wie die übrigen Daten oder gesonderte Steuerleitungen übertragen werden. Ein Steuersignal, das die Steuereinrichtung an den Datenschalter senden kann, kann bspw. den Steuerbefehl umfassen, die ankommenden Daten nicht an den

Netzwerkteilnehmer weiterzuleiten, d.h. den Datenschalter zu schließen.

Ferner kann die Steuereinrichtung mit dem Netzwerkteilnehmer bzw. Komponenten des Netzwerkteilnehmers, wie z.B. einer Recheneinheit, einer Anzeigeeinheit, einer Speichereinheit oder dgl., über einer Statusleitung verbunden sein, um Statusinformationen des Netzwerkteilnehmers zu empfangen. Die Statusinformationen können z.B. einen Zustand des Netzwerkteilnehmers anzeigen, so dass bspw. ein Fehler oder ein Defekt des Netzwerkteilnehmers mittels der Statusinformation an die Steuereinrichtung bzw. dessen Netzwerkinterface mit wenig Rechenaufwand und ohne Zeitverzug mitgeteilt werden kann.

Ferner kann das Netzwerkinterface eines Server-Netzwerkteilnehmers dazu geeignet sein, Daten jeweils in einer Abwärts- und einer Aufwärtsverbindung über den Datenschalter zu versenden und/oder zu empfangen. Da die Vorgänge innerhalb der Klienten-Netzwerkteilnehmer den größten Einfluss auf Latenzzeiten bei der Übertragung innerhalb des Netzwerkes aufweisen, kann das Netzwerkinterface eines Server-Netzwerkteilnehmers sogar ohne Datenweiche ausgeführt sein. Die Datenweiche kann jedoch auch vorgesehen sein und alternativ kann die Datenweiche auch so konfiguriert sein, wie für die Klienten-Netzwerkteilnehmer. Je nach Konfiguration ist so ein wenig komplexer Aufbau eines Netzwerkes mit möglichst gleichen Bauteilen und Konfigurationen möglich und/oder der Aufbau eines Netzwerkes, das eine noch stärkere Reduktion von Latenzzeiten ermöglicht.

Das Netzwerkinterface eines Server-Netzwerkteilnehmers kann ferner derart eingerichtet sein, in einer Abwärtsverbindung die von einem letzten Klienten-Netzwerkteilnehmers empfangenen Daten mit Daten zu vergleichen, die von dem Server-Netzwerkteilnehmers an einen ersten Klienten-Netzwerkteilnehmers versendet wurden. Dieser Vergleich kann beispielsweise dazu genutzt werden, festzustellen, ob die versendeten Daten einer Abwärtsverbindung bei allen Klienten-Netzwerkteilnehmern korrekt angekommen sind. Die Termini "letzter" und "erster" beziehen sich dabei bevorzugt auf ein Netzwerk, das als Ring aufgebaut ist, wobei der Server mit dem letzten und ersten Client direkt verbunden ist. Somit werden Datenfehlerprüfungen auf technisch wenig aufwendige Weise ermöglicht. Ferner wird hier ein Netzwerk mit einer Vielzahl Netzwerkteilnehmer mit einem Netzwerkinterface gemäß zumindest einem der voranstehenden Aspekte beschrieben, die in einer Ringanordnung seriell miteinander verbunden sind. Zumindest einer der Netzwerkteilnehmer ist dabei ein Server-Netzwerkteilnehmer und die weiteren Netzwerkteilnehmer sind Klienten-Netzwerkteilnehmer.

Somit wird eine Kommunikationsarchitektur vorgeschlagen, die eine Daisy-Chain-Architektur mit einer Ringarchitektur kombiniert und deren technische Vorteile nutzt. Daten können innerhalb der Ringanordnung der Netzwerkteilnehmer ohne Latenzzeit weitergereicht werden, da die Datenweiche des jeweiligen Netzwerkinterfaces empfangene Daten auch sofort an den nächsten Netzwerkteilnehmer in der Ringanordnung weiterleitet. Der hier beschriebene Aspekt beinhaltet ferner besonders bevorzugt eine hardwareimplementierte technische Lösung und ermöglicht dadurch eine einfache Qualifizierung und Umsetzung in Produkten. Es ist bspw. keine Änderung des Datenprotokolls notwendig.

Die physikalischen Verbindungen zwischen den Netzwerkteilnehmern können bevorzugt faseroptisch und/oder elektrisch ausgeführt sein.

Ferner wird hier ein Verfahren zum Versenden von Daten innerhalb des Netzwerkes gemäß zumindest einem der vorstehenden Aspekte beschrieben.

Der Server-Netzwerkteilnehmer versendet bei einer Abwärtsverbindung Daten an eine physikalische Schnittstelle eines ersten Klienten-Netzwerkteilnehmers. Die Datenweiche des ersten Klienten-Netzwerkteilnehmers leitet die Daten von der physikalischen Schnittstelle über den Datenschalter an den ersten Klienten-Netzwerkteilnehmer und über die gleiche oder eine zweite physikalische Schnittstelle (je nachdem, ob eine einzelne physikalische Schnittstelle oder mehrere physikalische Schnittstellen vorliegen) an die physikalische Schnittstelle des nächsten Klienten-Netzwerkteilnehmers weiter. Die Datenweiche des letzten Klienten-Netzwerkteilnehmers leitet die Daten an dessen Klienten-Netzwerkteilnehmer und an den Server-Netzwerkteilnehmer weiter.

Dieses Verfahren ermöglicht somit einen möglichst latenzzeitfreie Abwärtsversand von Daten innerhalb des Netzwerkes, da insbesondere keine Zwischenspeicherung in jedem einzelnen Netzwerkteilnehmer bzw. Netzwerkinterface stattfindet. Gerade im Hinblick auf Netzwerke mit einer großen Anzahl Netzwerkteilnehmer werden somit erhebliche Steigerungen im Hinblick auf Datenübertragungszeiten ermöglicht.

Ferner versendet ein Klienten-Netzwerkteilnehmer bei einer Aufwärtsverbindung Daten an eine physikalische Schnittstelle eines in Datenflussrichtung benachbarten Klienten-Netzwerkteilnehmer. Die Datenweiche des empfangenden Klienten-Netzwerkteilnehmers sendet die Daten von der physikalischen Schnittstelle über den Datenschalter an den ersten Klienten-Netzwerkteilnehmer und der Datenschalter leitet die Daten über die gleiche oder eine zweite physikalische Schnittstelle (je nachdem, ob eine einzelne physikalische Schnittstelle oder mehrere physikalische Schnittstellen vorliegen) an die physikalische Schnittstelle des nächsten Klienten-Netzwerkteilnehmers weiter bis der Server erreicht ist. Ferner leitet der Datenschalter des letzten Klienten-Netzwerkteilnehmers die Daten an dessen Klienten-Netzwerkteilnehmer und an den Server-Netzwerkteilnehmer weiter.

Der Server-Netzwerkteilnehmer kann bei einer Abwärts- oder Aufwärtsverbindung bevorzugt Daten über den Datenschalter und die Datenweiche empfangen und/oder senden.

Alternativ kann, wenn auch die Aufwärtsverbindung zeitkritisch ist, ein Weiterleiten über die Datenweiche, analog zum Verfahren bei einer Abwärtsverbindung, erfolgen.

Ferner wird hier ein Verfahren zur Datenübertragung im Falle eines Defektes innerhalb des Netzwerkes gemäß vorstehenden Aspekten beschrieben. Ein Defekt umfasst: Verbindungsunterbruch zwischen Clients/Servern und/oder ein defekter Client. Nach einem Auftreten eines Defektes kehren die Klienten-Netzwerkteilnehmer, die im Netzwerk in Datenflussrichtung hinter einer Position des Defektes angeordnet sind, die Datenflussrichtung um. Das Umkehren bedeutet, dass die technische Funktion der physikalischen Schnittstellen gegenüber dem Normalbetrieb vertauscht wird und die Datenflussrichtung umgedreht wird. So ist im Zusammenhang mit dem Umkehren diejenige der zumindest einen physikalischen Schnittstelle eines Netzwerkinterfaces, die vor dem Umkehren dazu eingerichtet war, Daten in einer Abwärtsverbindung zu empfangen, im Falle eines Defektes dazu eingerichtet, Daten weiterzuleiten (an ein benachbartes Netzwerkinterface). Die andere der zumindest einen physikalischen Schnittstelle des Netzwerkinterfaces, die vor dem Umkehren dazu eingerichtet war, Daten in einer Abwärtsverbindung weiterzuleiten, ist jetzt im Falle des Defektes dazu eingerichtet, Daten von einem benachbarten Netzwerkinterface zu empfangen. Im Falle der Aufwärtsverbindung wird dieses Umkehren analog durchgeführt. Im Falle, dass das Netzwerkinterface eine einzelne bidirektionale physikalische Schnittstelle aufweist, wird das Umkehren, falls erforderlich, analog durchgeführt. Dadurch dass in Datenflussrichtung alle Netzwerkteilnehmer nach/hinter einer Defektstelle, z.B. einem Kabelunterbruch oder einem defekten Netzwerkteilnehmer, derart "umgekehrt" werden, wird eine Kommunikation mit diesen Netzwerkteilnehmern ermöglicht, insbesondere dadurch, dass der Server im Falle eines Defektes dazu eingerichtet ist, Daten in beide Richtungen des Netzwerkringes zu versenden bzw. zu empfangen, d.h. Daten über seine (beiden) physikalische(n) Schnittstelle(n) zu versenden bzw. zu empfangen. Hier ist anzumerken, dass der Server im normalen Betriebszustand, in dem kein Defekt vorliegt, eine physikalische Schnittstelle bevorzugt auf "standby" schalten kann oder lediglich zum Empfang von Vergleichsdaten nutzen kann.

Wie bereits erläutert wurde kann der Server-Netzwerkteilnehmer bei einer Abwärtsverbindung Daten über (beide) physikalische(n) Schnittstelle(n) an die Klienten-Netzwerkteilnehmer versenden und bei einer Aufwärtsverbindung Daten von beiden Seiten des Netzwerkringes empfangen.

Dieses Verfahren erlaubt es, dass selbst im Falle eines Defekts weiterhin Daten an die Netzwerkteilnehmer, zumindest an die fehlerfreien, zuverlässig und latenzzeitfrei gesendet werden können.

Verfahren zur Datenübertragung im Falle eines Defektes innerhalb des Netzwerkes gemäß zumindest einem vorstehenden Aspekt, wobei ein Defekt dadurch detektiert wird, dass ein Klienten-Netzwerkteilnehmer und/oder Server-Netzwerkteilnehmer für eine vorbestimmte Zeit keine Daten empfangen hat, eine physikalische Schnittstelle einen Defekt meldet (der bspw. mittels einer internen Funktionen detektiert wurde) und/oder ein Klienten-Netzwerkteilnehmer mittels des Statussignals über die Statusleitung einen Defekt an die Steuereinrichtung meldet. Der Netzwerkteilnehmer, der einen Defekt detektiert hat, schaltet die entsprechende Datenflussrichtung der zumindest einen physikalischen Schnittstelle ab, die ihn (den Netzwerkteilnehmer) in Datenflussrichtung mit einem nächsten bzw. benachbarten Netzwerkteilnehmer in der Ringschaltung verbindet. Somit kann in der Reihenschaltung der Netzwerkteilnehmer eine Defektdetektion sukzessive und schnell weitergereicht werden, da das Abschalten der physikalischen Schnittstelle von dem benachbarten Netzwerkinterface wiederrum detektiert werden kann und dieses dann ebenfalls die entsprechende physikalische Schnittstelle abschalten kann.

Wenn die Weitergabe der Defektdetektion den Server-Netzwerkteilnehmer erreicht, so kann der Server-Netzwerkteilnehmer diese Information quittieren und in der Reihe der Netzwerkteilnehmer das Datensignal versenden, das die Umkehrung der Datenrichtung innerhalb jedes Netzwerkteilnehmers hinter der Defektstelle auslösen kann. Alternativ können auch die Klient-Netzwerkteilnehmer, die einen Defekt detektiert haben, nach einer bestimmten Wartezeit ihre Datenrichtung umkehren. Danach kann der Server Daten in beide Richtungen des Netzwerkringes versenden, so dass der zuverlässige Betrieb des Netzwerkes in weitest möglichem Umfang aufrechterhalten werden kann.

Zusammengefasst wird hier ein Netzwerkinterface vorgestellt, das insbesondere bei Abwärtsverbindungen innerhalb eines Netzwerkes ohne Latenzzeit Daten weiterversenden kann. Das Netzwerk selbst kann zudem die Vorteile nutzen, dass die Netzwerkteilnehmer hardwaremäßig identisch aufgebaut sein können und Daten zuverlässig und schnell, auch mittels der hier beschriebenen Verfahren, übertragen werden können. Defekte können zuverlässig und zeitnah erkannt werden und die Kommunikation innerhalb des Netzwerkes kann dennoch aufrechterhalten werden. Es wird hier somit eine technische Option beschrieben, latenzzeitoptimierte und zuverlässige Kommunikation zu ermöglichen.

Die hier dargelegten Aspekte werden im Folgenden exemplarisch mit Bezug auf die beigefügten, schematischen Zeichnungen beschrieben. Es zeigen
- Fig. 1: eine Architektur eines hier beschriebenen Netzwerkes,
- Fig. 2: ein hier beschriebenes Netzwerkinterface,
- Fig. 3: die Darstellung des Datenflusses in einem Klienten-Netzwerkinterface gemäß z.B. Fig. 2,
- Fig. 4: die Darstellung des Datenflusses in einem Server-Netzwerkinterface gemäß z.B. Fig. 2,
- Fig. 5: die Darstellung verschiedener beispielhafter Verbindungsfehler innerhalb des Netzwerkes gemäß Fig. 1,
- Fig. 6: die Darstellung des Datenflusses in einem Klienten-Netzwerkinterface nach einer Störstelle,
- Fig. 7: die Darstellung des Datenflusses in einem Server-Netzwerkinterface im Fehlerfall, und
- Fig. 8: die Darstellung der Weitergabe einer detektierten Störstelle durch kettensynchronisiertes Abschalten des Datensignales in einem hier beschriebenen Netzwerk.

Im Folgenden werden verschiedene Beispiele detailliert und unter Bezugnahme auf die Figuren beschrieben. Gleiche bzw. ähnliche Elemente in den Figuren werden hierbei mit gleichen Bezugszeichen bezeichnet. Die vorliegenden Vorrichtungen und Verfahren sind jedoch nicht auf die beschriebenen Kombinationen von Merkmalen begrenzt. Vielmehr sollen auch weitere Modifikationen und Kombinationen von Merkmalen verschiedener Beispiele im Rahmen des Schutzumfangs der unabhängigen Ansprüche umfasst sein.

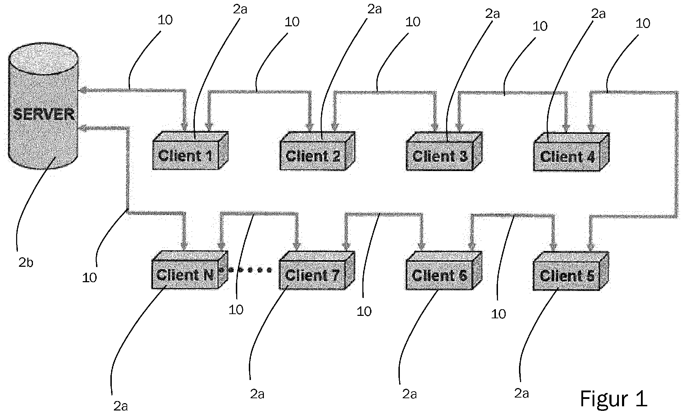

Figur 1 zeigt einen schematischen Aufbau einer hier beschriebenen fehlertoleranten, latenzzeitoptimierten Ringstruktur eines Netzwerkes. Die Klienten-Netzwerkteilnehmer 2a (kurz: Client; Client 1 bis Client N) sind in Reihenschaltung (Daisy-Chain) mit einem Server-Netzwerkteilnehmer 2b (kurz: Server) verbunden. Sowohl der erste "Client 1" als auch der letzte "Client N" sind mit dem Server 2b verbunden, sodass sich eine geschlossene Architektur, ein Ring, ergibt.

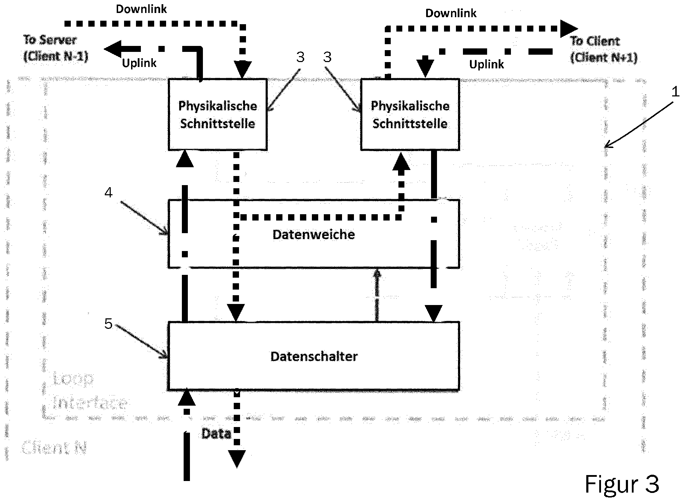

Die Datenverbindungen sind in Figur 1 mit Doppelpfeilen aufgezeigt, woraus ersichtlich ist, dass eine Kommunikation sowohl in Richtung des Servers 2b (Aufwärtsverbindung; Punktstrichlinien z.B. in Figur 3) als auch vom Server 2b in Richtung der Klienten-Netzwerkteilnehmer 2a (Abwärtsverbindung; Punktlinien z.B. in Figur 3) möglich ist. Die Netzwerkteilnehmer 2 sind jeweils mit zwei anderen (benachbarten) Netzwerkteilnehmern 2 verbunden, so dass Daten jeweils von benachbarten Netzwerkteilnehmern 2 empfangen oder an benachbarte Netzwerkteilnehmer 2 gesendet werden können.

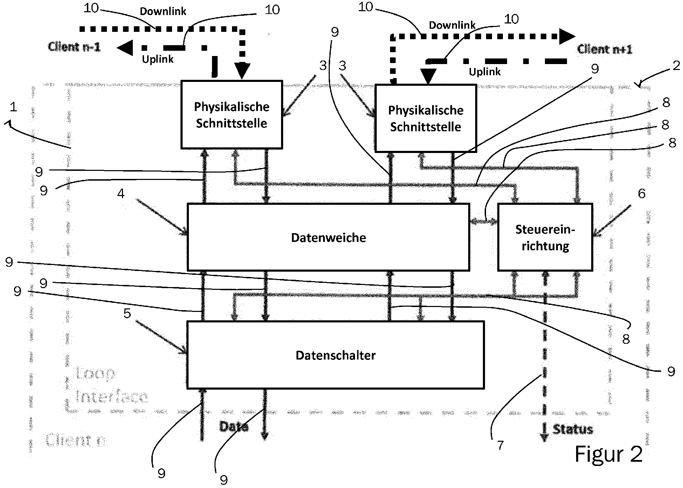

Figur 2 zeigt das physikalische Netzwerkinterface 1 (kurz: Interface) eines Klienten-Netzwerkteilnehmers 2a innerhalb der Netzwerkarchitektur gemäß Figur 1. Die physikalische Anbindung an das Netzwerk ist über eine physikalische Schnittstelle 3 ausgeführt gezeigt. Diese kann bidirektional (eine Leitung für Senden und Empfangen) oder unidirektional (separate Leitungen für Senden und Empfangen, wie dies Figur 2 darstellt) ausgeführt sein.

Beide Schnittstellen 3 sind über eine Datenweiche 4 an einen Datenschalter 5 angeschlossen, der bspw. ein Ethernet-basierten Datenschalter 5 sein kann. Dieser Datenschalter 5 empfängt die Daten und gibt die Daten an den Netzwerkteilnehmer 2 zur Verarbeitung weiter. Der Netzwerkteilnehmer 2 ist hier nicht näher gezeigt, kann jedoch beispielsweise eigene Recheneinheiten, Speichereinheiten, Anzeigeeinheiten, etc. aufweisen, die die über den Datenschalter 5 empfangenen Daten weiterverarbeiten, speichern oder dgl. können. Der Datenschalter 5 ist demnach die Instanz in dem Netzwerkinterface 1, die die Weiterleitung der Daten an den Netzwerkteilnehmer 2 bzw. dessen weiteren Komponenten zulassen oder verhindern kann. Gesteuert wird der Datenschalter 5 bevorzugt über eine Steuereinrichtung 6, die mit einer Steuersignalleitung 8, die in Figur 2 bidirektional gezeigt ist, an den Datenschalter 5 angeschlossen ist. Die Steuereinrichtung 6 kann bspw. an den Datenschalter 5 das Signal ausgeben, den Datenschalter 5 zu schließen, um Daten nicht zu dem Netzwerkteilnehmer 2 passieren zu lassen.

Ferner kann die Steuereinrichtung 6 die Steuerung der physikalischen Schnittstellen 3 und der Datenweiche 4 übernehmen. Die Steuereinrichtung 6 kann ferner Status- und Kontrollinformationen mit dem entsprechenden Netzwerkteilnehmer 2 (Client) austauschen. Ein Beispiel für eine Statusinformation ist, dass der Netzwerkteilnehmer einen internen Fehler oder Defekt anzeigen kann, so dass die Steuereinrichtung 6 einen Defektfallmodus aktivieren kann, der weiter unten beschrieben wird.

Zudem weist das gezeigte Netzwerkinterface 1 gemäß Figur 2 auch die bereits genannte Datenweiche 4 auf. Die Datenverbindungsleitungen 9 in Figur 2 zeigen, dass die Datenweiche 4 (insbesondere im Hinblick auf den Datenfluss) zwischen den beiden gezeigten physikalischen Schnittstellen 3 und dem Datenschalter 5 angeordnet ist. Die beiden physikalischen Schnittstellen 3 können Daten über die extern gezeigten Leitungen 10 empfangen bzw. versenden. Die Leitungen 10 sind dabei mit "Client n-1" bzw. "client n+1" gekennzeichnet, so dass ersichtlich wird, mit welchem Netzwerkteilnehmer 2 in Datenflussrichtung (aufwärts: n-1; abwärts: n+1) die physikalische Schnittstelle 3 verbunden ist.

Die Funktion der Datenweiche 4 wird nachfolgend im Detail erörtert werden: Bei Versenden von Daten mittels Abwärtsverbindung (Downlink) werden die Daten vom Server-Netzwerkteilnehmer 2b zu den Klienten-Netzwerkteilnehmern 2a versendet. Die Klienten-Netzwerkteilnehmer 2a speichern dabei die Daten nicht zwischen, bevor sie die Daten an den nächsten Klienten-Netzwerkteilnehmer 2a in der Reihe weiterleiten. Dies stellt die Figur 3 dar, die den Datenfluss innerhalb des Netzwerkinterfaces 1 für den Aufwärts- und Abwärtsverbindungsfall im Normalmodus (d.h. es liegt kein Defekt vor) zeigt.

So zeigt Figur 3 im Detail, dass bei einer Abwärtsverbindung der Klienten-Netzwerkteilnehmern 2a (Client N-1 in Figur 3) oder Server-Netzwerkteilnehmer 2b Daten versendet und die physikalische Schnittstelle 3 des ersten/nächsten Klienten-Netzwerkteilnehmers 2a diese empfängt. Die Daten werden dann innerhalb des Netzwerkinterfaces 1 an die Datenweiche 4 weitergegeben, die die Daten ohne Zwischenspeicherung sowohl an den Datenschalter 5 als auch an die in Figur 3 rechts gezeigte zweite physikalische Schnittstelle 3 weiterleitet, die mit den wiederum nächsten Klienten-Netzwerkteilnehmer 2a (in Figur 3: Client N+1) verbunden ist. Dadurch werden hohe Latenzzeiten vermieden, wie sie sonst bei herkömmlichen Daisy-Chain oder Ringarchitekturen auftreten. Mit anderen Worten übernimmt die Datenweiche 4 das direkte Weiterleiten der Daten, die die die Daten ohne Zwischenspeicherung sowohl an den nächsten Klienten-Netzwerkteilnehmer 2a wie auch den eigenen Klienten-Netzwerkteilnehmer 2a weitergibt.

Optional kann vor der Weitergabe der Datenstrom durch eine sogenannte "Clock and Data Recovery" aufgefrischt werden. Dies fügt zwar eine sehr kleine Latenzzeit in der Bitbreite hinzu, die jedoch zu vernachlässigen ist.

Der letzte Klienten-Netzwerkteilnehmer 2a (Client N in Figur 1) in dem Netzwerkring gibt die Daten wieder direkt an den Server 2b weiter. Dieser kann optional die empfangenen Daten mit den gesendeten Daten vergleichen um eventuelle Übertragungsfehler oder eine Loopunterbrechung zu detektieren.

Werden Daten von den Klienten-Netzwerkteilnehmern 2a zum Server 2b in einer Aufwärtsverbindung (sogenannter Uplink) gesendet (Figur 3), werden diese über den Datenschalter 5 geführt. Der Datenschalter 5 empfängt die Daten des eigenen Klienten-Netzwerkteilnehmer 2a und aller nachfolgenden Klienten-Netzwerkteilnehmer 2a (Client N+1) und gibt diese an den vorherigen Klienten-Netzwerkteilnehmer 2a weiter. Der erste Klienten-Netzwerkteilnehmer 2a (Client 1) gibt die Daten direkt an den Server 2b weiter.

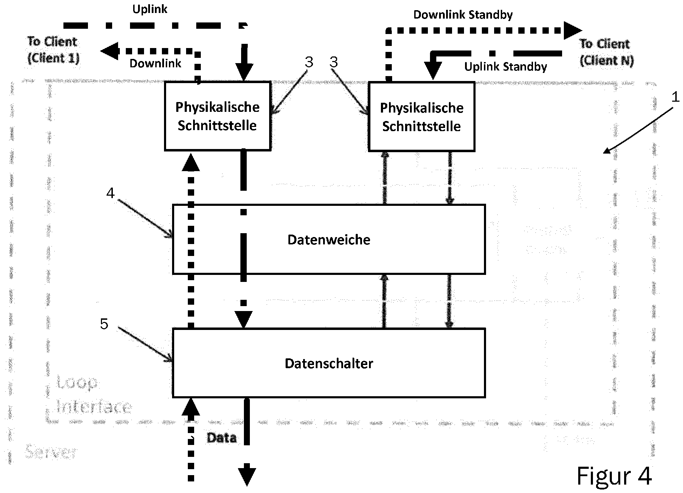

Der Server 2b besitzt das gleiche Netzwerkinterface 1 wie die zuvor beschriebenen Klienten-Netzwerkteilnehmer 2a. Der Datenfluss ist im Vergleich zu den Klienten-Netzwerkteilnehmer 2a bevorzugt unterschiedlich, wie die Figur 4 darstellt. Die Daten vom Server 2b zu den Klienten-Netzwerkteilnehmern 2a (Downlink) werden über den Datenschalter 5 und die Datenweiche 4 an den Klienten-Netzwerkteilnehmer 2a mit Kennzahl "1" in Figur 1 weitergegeben. Ebenso werden die Daten von den Klienten-Netzwerkteilnehmer 2a zum Server 2b (Uplink) über die Datenweiche 4 und den Datenschalter 5 an den Server 2b weitergegeben. Die Netzwerkanschlüsse/Schnittstellen 3 des Servers 2b in Richtung des letzten Netzwerkteilnehmers 2a (Client N in Figur 1) sind bevorzugt auf Bereitschaft (Standby) geschaltet (die dazugehörigen Leitungen zwischen der rechten physikalischen Schnittstelle 3 und der Datenweiche 4 bzw. der Datenweiche 4 und dem Datenschalter 5 sind mit unterbrochenen dünnen Linien gekennzeichnet).

Der oben geschilderte Aufbau des Netzwerkinterfaces 1, der Verschaltung der Netzwerkteilnehmer 2 und des Netzwerkes erlaubt es insbesondere, dass hardwaremäßig gleiche Netwerkinterfaces 1 verbaut werden können und Latenzzeiten bevorzugt bei Datenabwärtsverbindungen deutlich reduziert werden können.

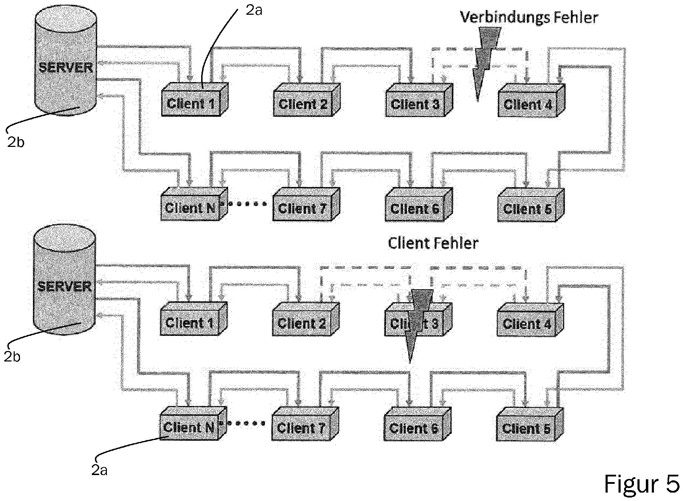

Weiterhin kann es innerhalb des Netzwerkes zu Defekten oder Störungen kommen, für die hier bestimmte Defektfallroutinen vorgesehen sind und nachfolgend beschrieben werden. Die Datenverbindung vom Server 2b zu den Klienten-Netzwerkteilnehmern 2a kann beispielsweise durch einen Verbindungsfehler (z.B. einen Kabelbruch), wie in Figur 5 oben dargestellt, oder durch eine Störung eines Klienten-Netzwerkteilnehmers 2a, wie in Figur 5 unten dargestellt, unterbrochen werden. Um diese Fehlerstelle auszugrenzen und trotz des Fehlers bzw. Defektes eine Verbindung zum Server 2b zu halten, wird die Datenrichtung (Downlink und Uplink) für alle Klienten-Netzwerkteilnehmer 2a nach der Störstelle umgekehrt, sodass weiterhin alle noch intakten Klienten-Netzwerkteilnehmer 2a vom Server 2b erreicht werden.

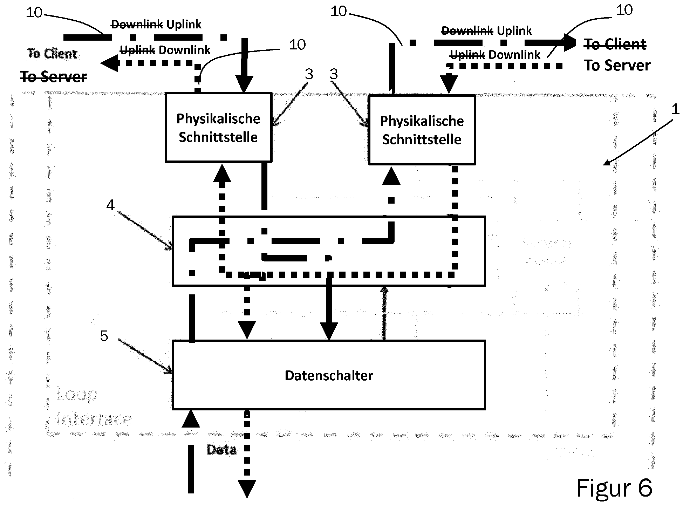

Hierbei kommuniziert der Server 2b von beiden Seiten des Netzwerkringes mit den Klienten-Netzwerkteilnehmern 2a. Der Datenfluss in der Netzwerkschnittstelle bzw. dem Netzwerkinterface 1 des Klienten-Netzwerkteilnehmer 2a, die sich vor der Störstelle befinden, ändert sich hierbei nicht. Der Datenfluss in der Netzwerkschnittstelle bzw. dem Netzwerkinterface 1 der Klienten-Netzwerkteilnehmer 2a, die sich nach der Störstelle befinden, wird umgekehrt, was in Figur 6 schematisch dargestellt ist.

Figur 6 zeigt im oberen Bereich und mittels einer Markierung "durchgestrichen", die jeweils umgekehrte Funktion der Leitungen 10, die zu den physikalischen Schnittstellen 3 führen bzw. davon abgehen. So wird die im Normalmodus während einer Abwärtsverbindung für den Empfang konfigurierte physikalische Schnittstelle 3, die in Figur 6 links angeordnet ist, im Falles eines Defektes bei einer Abwärtsverbindung als Schnittstelle 3 herangezogen, die Daten an den nächsten Klienten-Netzwerkteilnehmer 2a weiterversendet (anstatt, wie zuvor, von diesem in der Abwärtsverbindung Daten zu empfangen). Analog ändert sich die technische Funktion der in Figur 3 rechten physikalischen Schnittstelle 3 und der ihr zugeordneten Datenleitungen 10. Im Falle einer Aufwärtsverbindung erfolgt das Umkehren analog für beide physikalische Schnittstellen 3, wie die entsprechenden Beschriftungen der Figur 6 noch einmal verdeutlichen. Die oben beschriebene Funktionalität im Hinblick auf das Versenden bzw. Weiterleiten von Daten über die Datenweiche 4 bzw. den Datenschalter 5 wird hingegen (mit Ausnahme der Datenflussrichtung) beibehalten, d.h. insbesondere bei einer Abwärtsverbindung werden Daten von der Datenweiche 4 direkt an die physikalische Schnittstelle 3, die Daten an den nächsten Netzwerkteilnehmer 2a leitet, und an den Datenschalter 5 übergeben, während die Daten bei einer Aufwärtsverbindung über den Datenschalter 5 (und die Datenweiche 4) geleitet werden.

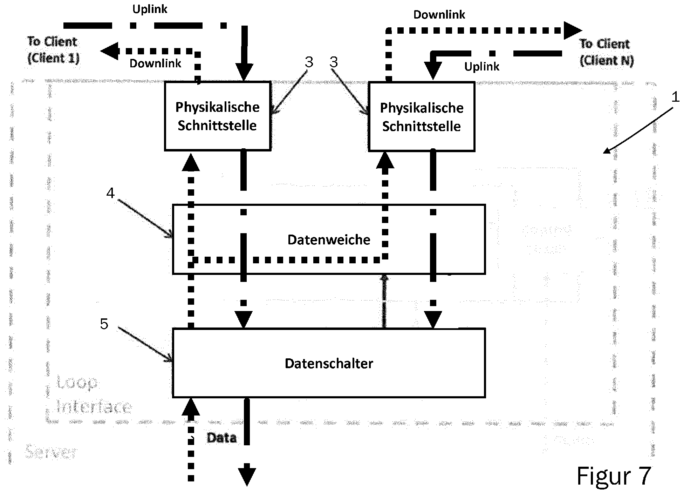

Der Datenfluss in der Netzwerkschnittstelle bzw. dem Netzwerkinterface 1 des Servers 2b ändert sich im Fehlerfall dahingehend, dass die Daten des Downlinks sowohl an den ersten Klienten-Netzwerkteilnehmer 2a (Client 1 in Figur 1) als auch an den letzten Klienten-Netzwerkteilnehmer 2a (Client N in Figur 1) ausgegeben werden, wie dies in Figur 7 schematisch dargestellt ist. Die Daten des Uplinks (z.B. von Client 1 und Client 2 in Figur 1) werden über den Datenschalter 5 dem Server 2b zugeführt.

Die Umkehrung des Datenflusses in den Klienten-Netzwerkteilnehmern 2a nach der Störstelle und der Datenversand vom Server 2b in beide Richtungen des Netzwerkringes erlaubt es, dass ein Defekt den weiteren Betrieb des Netzwerkes nicht vollständig zu unterbrechen vermag. Vielmehr kann das Netzwerk "fast" vollumfänglich weiter arbeiten. Dies bietet für Systeme, in denen die Verfahren eingesetzt werden, einen erheblichen Vorteil im Hinblick auf die Zuverlässigkeit bzw. Ausfallsicherheit des Systems, insbesondere wenn dieses über lange Zeiträume und von vielen Anwendern genutzt werden soll, wie z.B. IFE-Systeme von Flugzeugen.

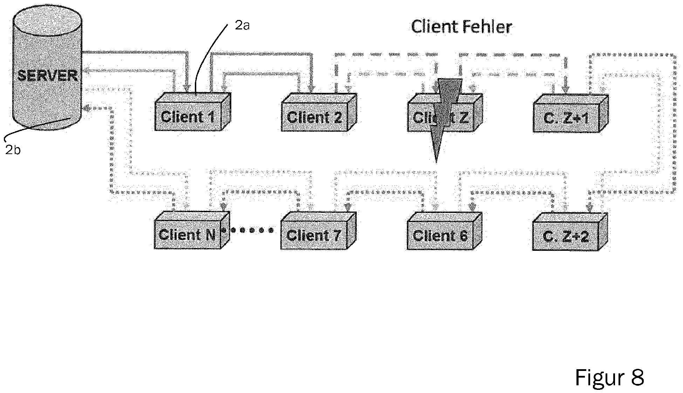

Die Defektfallroutine, die oben im Zusammenhang mit den Figuren 5-7 beschrieben wurde, wird bevorzugt ausgelöst, wenn ein Defekt erkannt wurde. Dies erfolgt bevorzugt gemäß den nachfolgenden Ausführungen: Tritt ein Verbindungsfehler zum Beispiel durch Kabelbruch oder durch eine Störung eines Klienten-Netzwerkteilnehmers 2a (bspw. Client Z in Figur 8) auf, so detektiert dies der nachfolgende Netzwerkteilnehmer 2a (Client Z+1 in Figur 8) aufgrund Verlustes des Verbindungssignals. Dies wird zum Beispiel bei optischen Transceivern durch das Signal "Loss of Signal" (LOS) signalisiert.

Ferner können Defekte auch dadurch erkannt werden, dass über eine Statusleitung 7, die z.B. in Figur 2 enthalten ist, der Netzwerkteilnehmer 2 ein Defektsignal an die Steuereinrichtung 6 des Netzwerkinterfaces 1 weiterleitet. Weiterhin kann auch vorgesehen sein, dass die Netzwerkinterfaces 1 in vorbestimmten Zeitintervallen Daten erwarten und den Empfang prüfen, z.B. mittels Pingsignalen. Sollten diese innerhalb der vorbestimmten Zeiträume ausbleiben, so kann ebenfalls auf einen Defekt geschlossen werden, z.B. durch Kabelbruch in der Leitung, von der Daten empfangen werden.

Die Weitergabe der Information des Ortes der Störstelle kann zum einen durch ein software-implementiertes Datenprotokoll geschehen oder durch eine softwareunabhängige hardware-integrierte Lösung. Hierbei schaltet der Klienten-Netzwerkteilnehmer 2a (Client Z+1 in Figur 8), der eine Störung erkannt hat, das Datensignal zum nächsten Netzwerkteilnehmer 2a (Client Z+2 in Figur 8) aus, sodass dieser ebenfalls eine Unterbrechung erkennt. So wird die Information einer Störstelle, ähnlich wie bei einer Kettensynchronisation, bis zum Server 2b weitergegeben.

Der Server 2b erkennt das Vorhandensein einer Störung und quittiert die Information indem er das Datensignal in umgekehrter Richtung zum letzten Netzwerkteilnehmer 2a (Client N in Figur 8) ausschaltet. Dieser gibt die Quittierung des Servers 2b weiter, indem er ebenfalls das Datensignal in Richtung des vorhergehenden Klienten-Netzwerkteilnehmers 2a (Client N-1 in Figur 8) ausschaltet. So wird die Quittierung des Servers 2b durch Kettensynchronisation bis zum Klienten-Netzwerkteilnehmer 2a (Client Z+1 in Figur 8), der die Störung erkannt hat, weitergegeben.

Alle Klienten-Netzwerkteilnehmer 2a, die eine Störung erkannt und die Quittierung durch den Server 2b erhalten haben, kehren nun den Datenfluss, wie zuvor beschrieben wurde, um und schalten das Datensignal wieder ein.

Der Server 2b kommuniziert nun von beiden Seiten des Ringes mit den Netzwerkteilnehmern 2, wie bereits beschrieben wurde. Bei einer Lösung basierend auf einem Software-implementierten Datenprotokoll empfängt der Server 2b den Ort der Störstelle durch den Klienten-Netzwerkteilnehmer 2a hinter der Störstelle (Client Z+1 in Figur 8) mit einem entsprechenden Datensatz.

Der Server 2b schaltet daraufhin den Datenfluss seines Netzwerkinterfaces 1, wie zuvor beschrieben wurde, um und sendet den Netzwerkteilnehmern 2 die sich nach der Störstelle befinden (Client Z+1 bis Client N in Figur 8) eine Anweisung den Datenfluss in ihrem Netzwerkinterface 1, wie zuvor beschrieben wurde, umzuschalten. Der Server 2b kann nun von beiden Seiten des Netzwerkringes weiterhin mit allen Netzwerkteilnehmern 2 kommunizieren.

Abschließend kann somit zusammengefasst werden, dass hier ein Netzwerkinterface 1 vorgestellt wird, das Latenzzeiten in Netzwerken, insbesondere Ringnetzwerken, minimieren kann. Ferner wird ein Netzwerk beschrieben, das sehr ausfallsicher ist, geringe Latenzzeiten aufweist, mit möglichst vielen gleichen Bauteilen aufgebaut werden kann und im Falle eines Defektes die Kommunikation weitestgehend aufrechterhalten kann. Weiterhin können Defekte schnell und sicher detektiert werden.

## Patentansprüche

1. Netzwerkinterface eines Netzwerkteilnehmers mit
zumindest einer physikalischen Schnittstelle (3) mit umkehrbarer Datenflussrichtung zum Verbinden des Netzwerkinterfaces (1) mit einem Netzwerkinterface (1) eines anderen Netzwerkteilnehmers (2),
zumindest einer Datenweiche (4), die mit der zumindest einen physikalischen Schnittstelle (3) verbunden ist und die dazu geeignet ist, Daten von der zumindest einen physikalischen Schnittstelle (3) zu empfangen und Daten an die zumindest eine physikalische Schnittstelle (3) zu senden, und
zumindest einem Datenschalter (5), der mit der Datenweiche (4) verbunden ist und der dazu geeignet ist, Daten von der Datenweiche (4) zu empfangen oder an die Datenweiche (4) zu senden, wobei
die Datenweiche (4) dazu geeignet ist, von der physikalischen Schnittstelle (3) empfangene Daten an einen anderen Netzwerkteilnehmer und den Datenschalter (5) weiterzuleiten,
wobei die Datenweiche (4) eines Klienten-Netzwerkteilnehmers (2a) dazu eingerichtet ist, von einer physikalischen Schnittstelle (3) eingehende Daten in einer Abwärtsverbindung zu verdoppeln und ohne Zwischenspeicherung an einen anderen Netzwerkteilnehmer (2) und den Datenschalter (5) weiterzuleiten.

2. Netzwerkinterface gemäß Anspruch 1, wobei das Netzwerkinterface zumindest eine physikalische Schnittstelle (3) für eine Abwärtsverbindung und zumindest eine physikalische Schnittstelle (3) für eine Aufwärtsverbindung aufweist.

3. Netzwerkinterface gemäß zumindest einem der voranstehenden Ansprüche, wobei das Netzwerkinterface (1) Teil eines Klienten-Netzwerkteilnehmers (2a) oder Teil eines Server-Netzwerkteilnehmers (2b) ist.

4. Netzwerkinterface gemäß zumindest einem der voranstehenden Ansprüche, wobei die Datenweiche (4) dazu eingerichtet ist, für von einer physikalischen Schnittstelle (3) eingehende Daten eine Taktrückgewinnung durchzuführen.

5. Netzwerkinterface gemäß zumindest einem der voranstehenden Ansprüche, wobei die Datenweiche (4) mit zumindest einer physikalischen Schnittstelle (3) und dem Datenschalter (5) zur Übertragung von Daten zwischen diesen Komponenten des Netzwerkinterfaces (1) verbunden ist, und
wobei eine Steuereinrichtung (6) des Netzwerkinterfaces (1) zumindest mit der Datenweiche (4), einer physikalischen Schnittstelle (3) und dem Datenschalter (5) derart verbunden ist, dass Steuersignale zwischen der Steuereinrichtung (6) und diesen Komponenten übertragbar sind.

6. Netzwerkinterface gemäß zumindest einem der voranstehenden Ansprüche, wobei die Steuereinrichtung (6) mit dem Netzwerkteilnehmer (2) über einer Statusleitung (7) verbunden ist, um Statusinformationen des Netzwerkteilnehmers (2) zu empfangen.

7. Netzwerkinterface gemäß zumindest einem der voranstehenden Ansprüche, wobei das Netzwerkinterface (1) eines Server-Netzwerkteilnehmers (2b) dazu geeignet ist, Daten jeweils in einer Abwärts- und einer Aufwärtsverbindung über den Datenschalter (5) zu versenden und zu empfangen.

8. Netzwerkinterface gemäß zumindest einem der voranstehenden Ansprüche, wobei das Netzwerkinterface (1) eines Server-Netzwerkteilnehmers (2b) dazu geeignet ist, in einer Abwärtsverbindung die von einem letzten Klienten-Netzwerkteilnehmer (2a) empfangenen Daten mit Daten zu vergleichen, die von dem Server-Netzwerkteilnehmer (2b) an einen ersten Klienten-Netzwerkteilnehmers (2a) versendet wurden.

9. Netzwerk mit einer Vielzahl Netzwerkteilnehmer mit einem Netzwerkinterface gemäß zumindest einem der Ansprüche 1 bis 8, die in einer Ringanordnung miteinander verbunden sind, wobei zumindest einer der Netzwerkteilnehmer (2) ein Server-Netzwerkteilnehmer (2b) und die weiteren Netzwerkteilnehmer Klienten-Netzwerkteilnehmer (2a) sind.

10. Netzwerk gemäß Anspruch 9, wobei physikalische Verbindungen zwischen den Netzwerkteilnehmern (2) faseroptisch oder elektrisch ausgeführt sind.

11. Verfahren zum Versenden von Daten innerhalb des Netzwerkes gemäß den Ansprüchen 9 oder 10, wobei der Server-Netzwerkteilnehmer (2b) bei einer Abwärtsverbindung Daten an eine physikalische Schnittstelle (3) eines ersten Klienten-Netzwerkteilnehmers (2a) versendet, die Datenweiche (4) des ersten Klienten-Netzwerkteilnehmers (2a) die Daten von der physikalischen Schnittstelle über den Datenschalter (5) an den ersten Klienten-Netzwerkteilnehmer (2a) und an die physikalische Schnittstelle des nächsten Klienten-Netzwerkteilnehmers (2a) weiterleitet, wobei die Datenweiche (4) des letzten Klienten-Netzwerkteilnehmer (2a) die Daten an diesen letzten Klienten-Netzwerkteilnehmer (2a) und an den Server-Netzwerkteilnehmer (2b) weiterleitet.

12. Verfahren zum Versenden von Daten innerhalb des Netzwerkes gemäß den Ansprüchen 9 oder 10, wobei ein Klienten-Netzwerkteilnehmer (2a) bei einer Aufwärtsverbindung Daten an eine physikalische Schnittstelle (3) eines benachbarten Klienten-Netzwerkteilnehmers (2a) versendet, die Datenweiche (4) des benachbarten Klienten-Netzwerkteilnehmers (2a) die Daten von der physikalischen Schnittstelle über den Datenschalter (5) an den Klienten-Netzwerkteilnehmer (2a) sendet und der Datenschalter (5) die Daten an die physikalische Schnittstelle (3) des nächsten Klienten-Netzwerkteilnehmers (2a) weiterleitet, wobei der Datenschalter (5) des letzten Klienten-Netzwerkteilnehmers (2a) die Daten an diesen letzten Klienten-Netzwerkteilnehmer (2a) und an den Server-Netzwerkteilnehmer (2b) weiterleitet.

13. Verfahren zur Datenübertragung im Falle eines Defektes innerhalb des Netzwerkes gemäß den Ansprüchen 9 oder 10, wobei nach einem Auftreten eines Defektes die Klienten-Netzwerkteilnehmer (2a), die im Netzwerk in Datenflussrichtung hinter einer Position des Defektes angeordnet sind, die Datenflussrichtung umkehren, so dass diejenige der zumindest einen physikalischen Schnittstelle, die vor dem Umkehren dazu eingerichtet war, Daten in einer Abwärtsverbindung zu empfangen, dazu eingerichtet ist, Daten weiterzuleiten, und diejenige der zumindest einen physikalischen Schnittstelle, die vor dem Umkehren dazu eingerichtet war, Daten in einer Abwärtsverbindung weiterzuleiten, dazu eingerichtet ist, Daten zu empfangen, und der Server-Netzwerkteilnehmer (2b) bei einer Abwärtsverbindung Daten in beide Richtungen des Netzwerkringes an die Klienten-Netzwerkteilnehmer (2a) versendet.

14. Verfahren zur Datenübertragung im Falle eines Defektes innerhalb des Netzwerkes gemäß den Ansprüchen 9 oder 10, wobei ein Defekt detektiert wird, wenn ein Klienten-Netzwerkteilnehmer (2a) und/oder Server-Netzwerkteilnehmer (2b) für eine vorbestimmte Zeit keine Daten empfangen hat, eine physikalische Schnittstelle (3) einen Defekt meldet und/oder ein Klienten-Netzwerkteilnehmer (2a) mittels des Statussignals einen Defekt an die Steuereinrichtung (6) meldet, und wobei der Netzwerkteilnehmer (2), der einen Defekt detektiert hat, die entsprechende Datenflussrichtung der zumindest einen physikalischen Schnittstelle abschaltet, die den Netzwerkteilnehmer (2) in Datenflussrichtung mit einem nächsten Netzwerkteilnehmer (2) in der Ringschaltung verbindet.

## Claims

1. Network interface of a network subscriber, having
at least one physical interface (3) with a reversible data flow direction for connecting the network interface (1) to a network interface (1) of another network subscriber (2),
at least one data selector (4) which is connected to the at least one physical interface (3) and is suitable for receiving data from the at least one physical interface (3) and for transmitting data to the at least one physical interface (3), and
at least one data switch (5) which is connected to the data selector (4) and is suitable for receiving data from the data selector (4) or for transmitting data to the data selector (4), wherein
the data selector (4) is suitable for forwarding data received from the physical interface (3) to another network subscriber and to the data switch (5),
wherein the data selector (4) of a client network subscriber (2a) is set up to duplicate data arriving from a physical interface (3) in a downlink and to forward said data to another network subscriber (2) and to the data switch (5) without buffering.

2. Network interface according to Claim 1, wherein the network interface
has at least one physical interface (3) for a downlink and at least one physical interface (3) for an uplink.

3. Network interface according to at least one of the preceding claims, wherein the network interface (1) is part of a client network subscriber (2a) or part of a server network subscriber (2b).

4. Network interface according to at least one of the preceding claims, wherein the data selector (4) is set up to carry out clock recovery for data arriving from a physical interface (3).

5. Network interface according to at least one of the preceding claims, wherein the data selector (4) is connected to at least one physical interface (3) and to the data switch (5) for transmitting data between these components of the network interface (1), and wherein a control device (6) of the network interface (1) is connected at least to the data selector (4), to a physical interface (3) and to the data switch (5) in such a manner that control signals can be transmitted between the control device (6) and these components.

6. Network interface according to at least one of the preceding claims, wherein the control device (6) is connected to the network subscriber (2) via a status line (7) in order to receive status information relating to the network subscriber (2).

7. Network interface according to at least one of the preceding claims, wherein the network interface (1) of a server network subscriber (2b) is suitable for respectively transmitting and receiving data in a downlink and an uplink via the data switch (5).

8. Network interface according to at least one of the preceding claims, wherein the network interface (1) of a server network subscriber (2b) is suitable for comparing the data received from a last client network subscriber (2a) in a downlink with data which have been transmitted from the server network subscriber (2b) to a first client network subscriber (2a) .

9. Network having a multiplicity of network subscribers with a network interface according to at least one of Claims 1 to 8 which are connected to one another in a ring arrangement, wherein at least one of the network subscribers (2) is a server network subscriber (2b) and the further network subscribers are client network subscribers (2a).

10. Network according to Claim 9, wherein physical connections between the network subscribers (2) are fibre-optic or electrical.

11. Method for transmitting data within the network according to Claim 9 or 10, wherein the server network subscriber (2b) transmits data to a physical interface (3) of a first client network subscriber (2a) in a downlink, the data selector (4) of the first client network subscriber (2a) forwards the data from the physical interface to the first client network subscriber (2a) and to the physical interface of the next client network subscriber (2a) via the data switch (5), wherein the data selector (4) of the last client network subscriber (2a) forwards the data to this last client network subscriber (2a) and to the server network subscriber (2b) .

12. Method for transmitting data within the network according to Claim 9 or 10, wherein a client network subscriber (2a) transmits data to a physical interface (3) of an adjacent client network subscriber (2a) in an uplink, the data selector (4) of the adjacent client network subscriber (2a) transmits the data from the physical interface to the client network subscriber (2a) via the data switch (5), and the data switch (5) forwards the data to the physical interface (3) of the next client network subscriber (2a), wherein the data switch (5) of the last client network subscriber (2a) forwards the data to this last client network subscriber (2a) and to the server network subscriber (2b).

13. Method for transmitting data in the event of a defect within the network according to Claim 9 or 10, wherein, after a defect has occurred, the client network subscribers (2a) which are arranged downstream of a position of the defect in the data flow direction in the network reverse the data flow direction, with the result that that physical interface of the at least one physical interface which was set up to receive data in a downlink before the reversal is set up to forward data and that physical interface of the at least one physical interface which was set up to forward data in a downlink before the reversal is set up to receive data, and the server network subscriber (2b) transmits data in both directions of the network ring to the client network subscribers (2a) in a downlink.

14. Method for transmitting data in the event of a defect within the network according to Claim 9 or 10, wherein a defect is detected if a client network subscriber (2a) and/or a server network subscriber (2b) has/have not received any data for a predetermined time, a physical interface (3) reports a defect and/or a client network subscriber (2a) reports a defect to the control device (6) by means of the status signal, and wherein the network subscriber (2) which has detected a defect disconnects the corresponding data flow direction of the at least one physical interface which connects the network subscriber (2) to a next network subscriber (2) in the ring circuit in the data flow direction.

## Revendications

1. Interface de réseau d'un membre du réseau comprenant
au moins une interface physique (3) avec direction du flux des données réversible servant à connecter l'interface de réseau (1) à une interface de réseau (1) d'un autre membre du réseau (2),
au moins un filtre séparateur de données (4) qui est relié à l'au moins une interface physique (3) et qui est adapté pour recevoir des données de l'au moins une interface physique (3) et envoyer des données à l'au moins une interface physique (3), et
au moins un commutateur de données (5) qui est relié au filtre séparateur de données (4) et qui est adapté pour recevoir des données du filtre séparateur de données (4) ou en envoyer au filtre séparateur de données (4), le filtre séparateur de données (4) étant adapté pour retransmettre les données reçues de la part de l'interface physique (3) à un autre membre du réseau et au commutateur de données (5),
le filtre séparateur de données (4) d'un membre du réseau client (2a) étant conçu pour doubler les données entrantes en provenance d'une interface physique (3) dans une connexion vers l'aval et les retransmettre sans mémorisation intermédiaire à un autre membre du réseau (2) et au commutateur de données (5).

2. Interface de réseau selon la revendication 1, l'interface de réseau possédant au moins une interface physique (3) pour une connexion vers l'aval et au moins une interface physique (3) pour une connexion vers l'amont.

3. Interface de réseau selon au moins l'une des revendications précédentes, l'interface de réseau (1) étant une partie d'un membre du réseau client (2a) ou une partie d'un membre du réseau serveur (2b).

4. Interface de réseau selon au moins l'une des revendications précédentes, le filtre séparateur de données (4) étant conçu pour effectuer une récupération d'horloge pour les données entrantes en provenance d'une interface physique (3).

5. Interface de réseau selon au moins l'une des revendications précédentes, le filtre séparateur de données (4) étant relié à au moins une interface physique (3) et au commutateur de données (5) en vue de la transmission de données entre ces composants de l'interface de réseau (1), et
un dispositif de commande (6) de l'interface de réseau (1) étant relié au moins au filtre séparateur de données (4), à une interface physique (3) et au commutateur de données (5) de telle sorte que des signaux de commande peuvent être transmis entre le dispositif de commande (6) et ces composants.

6. Interface de réseau selon au moins l'une des revendications précédentes, le dispositif de commande (6) étant relié au membre du réseau (2) par le biais d'une ligne d'état (7) afin de recevoir des informations d'état du membre du réseau (2).

7. Interface de réseau selon au moins l'une des revendications précédentes, l'interface de réseau (1) d'un membre du réseau serveur (2b) étant adaptée pour envoyer et pour recevoir des données par le biais du commutateur de données (5) respectivement dans une connexion vers l'aval et une connexion vers l'amont.

8. Interface de réseau selon au moins l'une des revendications précédentes, l'interface de réseau (1) d'un membre du réseau serveur (2b) étant adaptée pour, dans une connexion vers l'aval, comparer les données reçues de la part d'un dernier membre du réseau client (2a) avec les données qui ont été envoyées par le membre du réseau serveur (2b) à un premier membre du réseau client (2a).

9. Réseau comprenant une pluralité de membres du réseau dotés d'une interface de réseau selon au moins l'une des revendications 1 à 8, lesquels sont connectés entre eux dans un arrangement en anneau, au moins l'un des membres du réseau (2) étant un membre du réseau serveur (2b) et les autres étant des membres du réseau clients (2a).

10. Réseau selon la revendication 9, les connexions physiques entre les membres du réseau (2) étant réalisées par fibres optiques ou électriquement.

11. Procédé pour envoyer des données au sein du réseau selon l'une des revendications 9 ou 10, le membre du réseau serveur (2b), lors d'une connexion vers l'aval, envoyant des données à une interface physique (3) d'un premier membre du réseau client (2a), le filtre séparateur de données (4) du premier membre du réseau client (2a) retransmettant les données de l'interface physique par le biais du commutateur de données (5) au premier membre du réseau client (2a) et à l'interface physique du prochain membre du réseau client (2a), le filtre séparateur de données (4) du dernier membre du réseau client (2a) retransmettant les données à ce dernier membre du réseau client (2a) et au membre du réseau serveur (2b).

12. Procédé pour envoyer des données au sein du réseau selon l'une des revendications 9 ou 10, un membre du réseau client (2a), lors d'une connexion vers l'amont, envoyant des données à une interface physique (3) d'un membre du réseau client (2a) voisin, le filtre séparateur de données (4) du membre du réseau client (2a) voisin envoyant les données de l'interface physique par le biais du commutateur de données (5) au membre du réseau client (2a) et le commutateur de données (5) retransmettant les données à l'interface physique (3) du prochain membre du réseau client (2a), le commutateur de données (5) du dernier membre du réseau client (2a) retransmettant les données à ce dernier membre du réseau client (2a) et au membre du réseau serveur (2b).

13. Procédé de transmission de données dans le cas d'un défaut au sein du réseau selon les revendications 9 ou 10, procédé selon lequel, après une survenance d'un défaut, les membres du réseau clients (2a) qui sont disposés derrière une position du défaut dans le réseau dans la direction du flux de données inversent la direction du flux des données de sorte que celle parmi l'au moins une interface physique qui, avant l'inversion, était conçue pour recevoir des données dans une connexion vers l'aval, est conçue pour retransmettre des données et celle parmi l'au moins une interface physique qui, avant l'inversion, était conçue pour retransmettre des données dans une connexion vers l'aval, est conçue pour recevoir des données, et le membre du réseau serveur (2b), lors d'une connexion vers l'aval, envoie des données aux membres du réseau client (2a) dans les deux directions de l'anneau du réseau.

14. Procédé de transmission de données dans le cas d'un défaut au sein du réseau selon les revendications 9 ou 10, un défaut étant détecté lorsqu'un membre du réseau client (2a) et/ou un membre du réseau serveur (2b) n'a reçu aucune donnée pendant une durée prédéfinie, une interface physique (3) signalant un défaut et/ou un membre du réseau client (2a) signalant un défaut au dispositif de commande (6) au moyen du signal d'état, et le membre du réseau (2) qui a détecté un défaut déconnectant la direction du flux des données correspondante de l'au moins une interface physique qui connecte le membre du réseau (2) à un prochain membre du réseau (2) dans le circuit en anneau dans la direction du flux des données.
